# EUROPÄISCHE PATENTSCHRIFT

(11) **EP 1 070 647 B1**
(45) Veröffentlichungstag und Bekanntmachung des Hinweises auf die Patenterteilung: **07.07.2004**
(21) Anmeldenummer: 99121200.2
(22) Anmeldetag: 23.10.1999
(51) Int. Cl.: B61G 11/12, F16F 9/50, F16F 9/48

(54) **Langhubdämpfer zur Dämpfung von auf einen Eisenbahnwagen einwirkender Stossenergie**
Long stroke damper for damping the impact force acting on a railway vehicle
Amortisseur à course longue pour l'amortissement de la force de choc agissant sur un véhicule ferroviaire

(30) Priorität: 23.07.1999 DE 19933862
(43) Veröffentlichungstag der Anmeldung: 24.01.2001
(73) Patentinhaber: Waggonbau Elze GmbH & Co. Besitz KG, 31008 Elze (DE)
(72) Erfinder: Höhne, Wolfram, 22339 Hamburg (DE)
(74) Vertreter: Gosch, Wolf-Dietrich

(56) Entgegenhaltungen:
- DE-A- 19 546 729
- US-A- 3 412 870
- US-A- 3 892 298
- US-A- 4 029 306
- US-A- 4 660 687
- US-A- 5 293 968

## Beschreibung

Die Erfindung betrifft einen Langhubdämpfer zur Dämpfung von auf einen Eisenbahnwagen einwirkender Stoßkraft mit einem mit einem Dämpfungsmedium gefüllten und an seinem einen Ende geschlossenen Zylinder, in dem ein an seinen beiden Enden geschlossener Zylinderkolben längsverschieblich gelagert ist, in dessen Innenraum ein in Längsrichtungen verschieblicher Kolben gelagert ist, auf dessen einer Seite, welche der geschlossenen Seite des Zylinders entspricht, das Dämpfungsmedium angeordnet ist und an dessen anderer Seite von unter Überdruck stehendem Gas beaufschlagt ist, wobei der Zylinder und der Innenraum über eine mit einem Dämpfungsdorn versehene Drosselöffnung verbunden sind, und der Dämpfungsdorn als ein das Dämpfungsmedium durchleitendes Rohr ausgebildet ist.

Derartige hydraulische Langhubdämpfer sind aus der US-A-3412870 und aus der US-A-3892298 bekannt. Das Dämpfungsverhalten der Langhubdämpfer wird durch den Vordruck des Stickstoffes und die Gestaltung der Drossel in der Form eines konturierten Dämpfungsdornes, der durch die Drosselöffnung gleitet, bestimmt. Weiter ist ein Langhubdämpfer bekannt, bei dem die Dämpfung durch die Komprimierung einer elastischen Masse erreicht wird in die ein Dämpfungsdorn stößt, der ebenfalls durch seine Form das Dämpfungsverhalten bestimmt. Ferner ist ein Langhubdämpfer bekannt, bei dem vorgespannte Federpakete zusammengedrückt werden, die Dampfung erfolgt durch Reibung. Kombinationen mit Federn und hydraulischer Dämpfung sind ebenfalls bekannt. Alle vorgenannten Systeme zeichnen sich dadurch aus, dass sie auf eine bestimmte Masse bzw. Auflaufgeschwindigkeit optimiert und fest eingestellt sind. Das bedeutet, dass sie beispielsweise bei geringer abzudämpfender Masse gegebenenfalls viel zu hart oder bei hoher Masse und hoher Geschwindigkeit gegebenenfalls zu weich sind.

Aufgabe der vorliegenden Erfindung ist es daher, einen Langhubdämpfer der eingangs genannten Art zu schaffen, der in Abhängigkeit bestimmter Führungsgrößen wie Massen, Geschwindigkeiten und Komfortempfinden in seinem Dämpfungsverhalten durch Steuerungsmaßnahmen verändert werden kann.

Diese Aufgabe wird erfindungsgemäß dadurch gelöst, dass das Dämpfungsmedium durchleitendes Rohr über ein durch eine Regeleinheit regelbares Drosselventil mit einer das Dämpfungsmedium durchleitenden Leitung mit dem Zylinder verbunden ist und das Drosselventil mit einem die Masse der Zuladung des Eisenbahnwagens messenden Wiegeventil verbunden ist.

Diese Gestaltung hat den Vorteil, dass jeweils in Abhängigkeit zu der abzufedernden Masse und der gefahrenen Geschwindigkeit kontinuierlich der Langhubdämpfer durch weiteres Öffnen oder Verschließen des Drosselventiles das Maß der Durchgängigkeit des Dämpfungsdornes gesteuert werden kann und damit entweder ein härteres oder ein weicheres Abdämpfen der zu schützenden Ladung herbeigeführt werden kann.

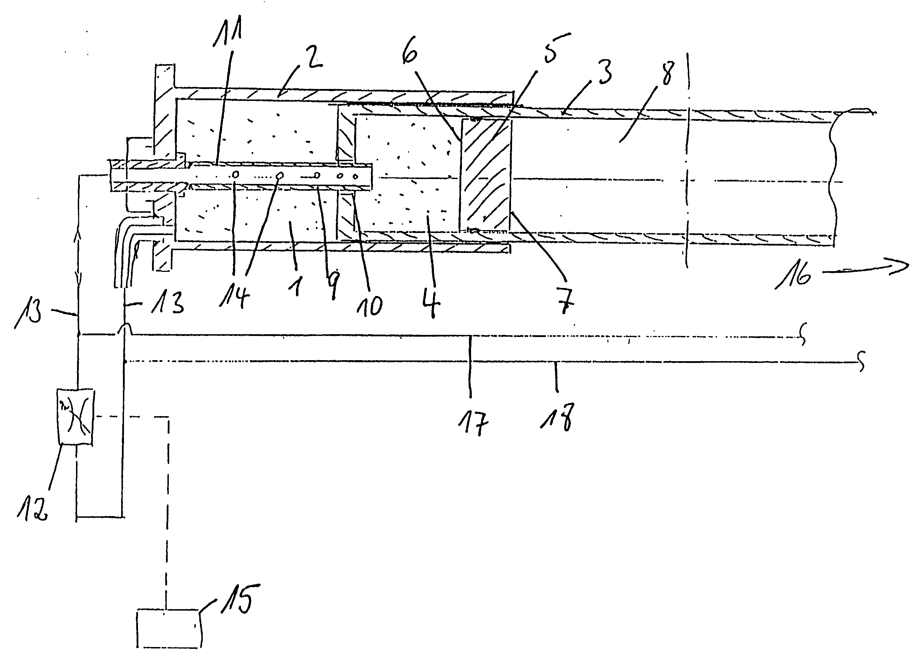

Weitere Einzelheiten der Erfindung ergeben sich aus der nachfolgenden ausführlichen Beschreibung und der beigefügten Zeichnung, in der eine bevorzugte Ausführungsform der Erfindung beispielsweise veranschaulicht ist.

Die Zeichnung zeigt einen Längsschnitt durch einen Langhubdämpfer in schematischer Darstellung.

Ein Langhubdämpfer besteht im wesentlichen aus einem mit einem Dämpfungsmedium 1 gefüllten Zylinder 2 in dem ein Zylinderkolben 3 längsverschieblich gelagert ist, in dessen Innenraum 4 ein in Längsrichtungen verschieblicher Kolben 5 gelagert ist, auf dessen einer Seite 6 das Dämpfungsmedium 1 angeordnet ist und dessen andere Seite 7 von unter Überdruck stehendem Stickstoff 8 beaufschlagt ist, wobei der Zylinder 2 und der Innenraum 4 über eine mit einem Dämpfungsdorn 9 versehene Drosselöffnung 10 verbunden sind und der Dämpfungsdorn 9 als ein das Dämpfungsmedium 1 durchleitendes Rohr 11 ausgebildet ist, das über ein regelbares Drosselventil 12 mit einer das Druckmedium leitenden Leitung 13 mit dem Zylinder 2 verbunden ist. Das Rohr 11 ist mit einer Mehrzahl von Bohrungen 14 durchdrungen, die sich in Längsrichtung über seine Mantelfläche erstrecken. Die Bohrungen 14 sind in unterschiedlichen Abständen angeordnet und weisen auch in Richtung auf den Zylinder 2 ansteigende Durchmesser auf.

Das Drosselventil 12 ist mit einem die Masse der Zuladung des Eisenbahnwagens messenden Wiegeventil 15 verbunden. Das Drosselventil 12 ist ferner mit einem die Geschwindigkeit des Eisenbahnwagens messenden Tachometer sowie mit einem eine bim Ablauf des Eisenbahnwagens und Auftreffen auf einen anderen Wagen messenden Beschleunigungsmesser verbunden (Tachometer und Beschleunigungsmesser sind nicht dargestellt). Das Wiegeventil 15, der Tachometer und der Beschleunigungsmesser sind über eine Regeleinheit (nicht dargestellt) mit dem Drosselventil 12 verbunden.

Der Zylinderkolben 3 ist an seinem dem Zylinder 2 abgewandten Ende mit einem zweiten (gleichartigen) Zylinder (nicht dargestellt) versehen. Der Zylinder 2 und der zweite Zylinder sind über Druckausgleichsleitungen 17, 18 miteinander verbunden. Hierdurch verdoppelt sich die Dämpfungswirkung bei einem Eisenbahnwagen und der Langhubdämpfer wirkt in beiden Längsrichtungen des Eisenbahnwagens in gleicher Weise.

Der erfindungsgemäße Langhubdämpfer, der mit einem hydraulischen Dämpfungssystem arbeitet, ist dadurch regelbar, daß das Dämpfungsmedium (Öl, Wasser u.a.) beim Strömen vom Innenraum 4 in den Zylinder 2 und umgekehrt über das Drosselventil 12 geleitet wird, das ein Proportionalregelventil ist. Dieses Proportionalregelventil kann in den Langhubdämpfer integriert werden, nach der Darstellung in der Figur liegt es jedoch außerhalb des Langhubdämpfers. Dort ist dargestellt, wie der Ölstrom aus den verschiedenen Druckräumen nach außerhalb über das Drosselventil 12 geleitet wird.

Durch die Steuerung des Dämpfungsverhaltens über das Drosselventil 12 kann die Dämpfungsarbeit zum Beispiel in Abhängigkeit mit der Masse geregelt werden. Beispielsweise bei einem Güterwagen mit Langhubdämpfern kann für Teilbeladungszustände, d.h. bei geringer zu verzögernder Masse die Dämpfung durch Öffnen des Drosselventil 12 geringer werden, damit ist gewährleistet, dass der Aufbau dieses Güterwagens in jedem Beladungszustand der maximal zur Verfügung stehenden Dämpferweg ausnutzt und damit die auftretenden Beschleunigungskräfte im Aufbau auch bei geringerer Beladung keine größeren Werte erfahren.

Ebenso ist vorstellbar, dass der Langhubdämpfer zum Beispiel zur Aufnahme von Stößen aus auflaufenden Lasten (Puffer) sein Dämpfverhalten in Abhängigkeit mit der Geschwindigkeit des auflaufenden Güterwagens einstellen kann und damit immer den maximalen Pufferhub unabhängig von der Geschwindigkeit ausfahren kann. Damit lassen sich die Beschleunigungskräfte beim Auflaufen Massen auf diesen Puffer in jedem Falle auf das kinimatisch mögliche Minimum reduzieren.

Auch der Dämpfungsdorn 9 unterscheidet sich von bisher im Einsatz befindlichen Dämpfungsdornen erheblich. Ein Dämpfungsdorn bestimmt im wesentlichen durch seine Kontur das Dämpfungsverhalten des Langhubdämpfers. Er wird durch unterschiedliche Durchmesser über die Länge des Dornes realisiert. Es ist jedoch bei der Herstellung recht aufwendig, den Dorn auf einer Drehmaschine entsprechend zu drehen, um diese unterschiedlichen Durchmesser zu erhalten. Der erfindungsgemäße Langhubdämpfer erzielt die gewollten unterschiedlichen Dämpfungseigenschaften des Dorn durch die Bohrungen 14, die sich in unterschiedlichen, in Richtung auf den Zylinder 2 ansteigenden Durchmessern über die Mantelfläche des Rohres 11 in seiner Längsrichtung erstrecken. Es ist erheblich einfacher, durch Einbringen von Bohrungen das optimierte Dämpfungsverhalten herzustellen und einzustellen. Im übrigen ist der rohrförmige Dämpfungsdorn 9 erheblich leichter als bisher übliche Dämpfungsdorne.

## Patentansprüche

1. Langhubdämpfer zur Dämpfung von auf einen Eisenbahnwagen einwirkender Stoßkraft mit einem mit einem Dämpfungsmedium (1) gefüllten und an seinem einen Ende geschlossenen Zylinder (2), in dem ein an seinen beiden Enden geschlossener Zylinderkolben (3) längsverschieblich gelagert ist, in dessen Innenraum (4) ein in Längsrichtungen verschieblicher Kolben (5) gelagert ist, auf dessen einer Seite (6), welche der geschlossenen Seite des Zylinders (2) entspricht, das Dämpfungsmedium (1) angeordnet ist und an dessen anderer Seite (7) von unter Überdruck stehendem Gas (8) beaufschlagt ist, wobei der Zylinder (2) und der Innenraum (4) über eine mit einem Dämpfungsdorn (9) versehene Drosselöffnung (10) verbunden sind, und der Dämpfungsdorn (9) als ein das Dämpfungsmedium (1) durchleitendes Rohr (11) ausgebildet ist, **dadurch gekennzeichnet, dass** das Rohr (11) über ein durch eine Regeleinheit regelbares Drosselventil (12) mit einer das Dämpfungsmedium (1) durchleitenden Leitung (13) mit dem Zylinder (2) verbunden ist und das Drosselventil (12) mit einem die Masse der Zuladung des Eisenbahnwagens messenden Wiegeventil (15) verbunden ist.

2. Langhubdämpfer nach Anspruch 1, **dadurch gekennzeichnet, dass** das Drosselventil (12) mit einem die Geschwindigkeit messenden Tachometer verbunden ist.

3. Langhubdämpfer nach Anspruch 1 und 2, **dadurch gekennzeichnet, dass** das Drosselventil (12) mit einem eine auf den Wagen einwirkende Stoßkraft messenden Beschleunigungsmesser verbunden ist.

4. Langhubdämpfer nach Anspruch 2 und 3, **dadurch gekennzeichnet, dass** das Wiegeventil, der Tachometer und der Beschleunigungsmesser über die einen Öffnungsgrad des Drosselventils 12 steuernde Regeleinheit mit dem Drosselventil 12 verbunden sind.

5. Langhubdämpfer nach Anspruch 1 bis 4, **dadurch gekennzeichnet, dass** der Zylinderkolben (4) an seinem dem Zylinder (2) abgewandten Ende mit einem zweiten, gleichartigen Zylinder (16) versehen ist.

6. Langhubdämpfer nach Anspruch 5, **dadurch gekennzeichnet, dass** der Zylinder (2) und der zweite Zylinder (16) über Druckausgleichsleitungen (17, 18) miteinander verbunden sind.

## Claims

1. A long-stroke damper for damping an impact force which acts on a railway wagon, comprising a cylinder (2), which is filled with a damping medium (1) and which is closed at one end, and in which a cylinder piston (3) which is closed at both its ends is mounted so that it is longitudinally displaceable, in the interior space (4) of which cylinder piston a piston (5) is mounted which is displaceable in longitudinal directions, on one side (6) of which piston, which corresponds to the closed end of the cylinder (2), the damping medium (1) is disposed, and which piston is acted upon on its other side (7) by a gas (8) under an overpressure, wherein the cylinder (2) and the interior space (4) are connected via a throttle opening (10) which is provided with a damping core (9), and the damping core (9) is formed as a tube (11) through which the damping medium (1) passes, **characterised in that** the tube (11) is connected to the cylinder (2) via a throttle valve (12) which can be adjusted by a control unit and which comprises a line (13) through which the damping medium (1) passes, and the throttle valve (12) is connected to a weighing valve (15) which measures the mass of the load of the railway wagon.

2. A long-stroke damper according to claim 1, **characterised in that** the throttle valve (12) is connected to a speedometer which measures the speed.

3. A long-stroke damper according to claim 1 and 2, **characterised in that** the throttle valve (12) is connected to an accelerometer which measures the impact force acting on the wagon.

4. A long-stroke damper according to claims 2 and 3, **characterised in that** the weighing valve, the speedometer and the accelerometer are connected to the throttle valve (12) via the control unit, which controls the degree of opening of the throttle valve (12).

5. A long-stroke damper according to claims 1 to 4, **characterised in that** at its end remote from the cylinder (2) the cylinder piston (3) is provided with a second cylinder (16) of the same type.

6. A long-stroke damper according to claim 5, **characterised in that** the cylinder (2) and the second cylinder (16) are connected to each other via pressure equalisation lines (17, 18).

## Revendications

1. Amortisseur à longue course, destiné à l'amortissement d'une force de choc agissant sur une voiture ou un wagon de chemin de fer, et comportant un cylindre (2) rempli d'un milieu d'amortissement (1) et fermé à l'une de ses extrémités, cylindre dans lequel est monté, de manière à se déplacer longitudinalement, un piston de cylindre (3) fermé à ses deux extrémités et dans l'espace intérieur (4) duquel est monté un piston (5) mobile dans des directions longitudinales et sur un côté (6) duquel, qui correspond au côté fermé du cylindre (2), est placé le milieu d'amortissement (1) et qui est sollicité, au niveau de son autre côté (7), par un gaz (8) soumis à une surpression, le cylindre (2) et l'espace intérieur (4) étant reliés par l'intermédiaire d'un orifice d'étranglement (10) pourvu d'une tige d'amortissement (9), cette tige d'amortissement (9) étant réalisée en tant que tube d'acheminement (11) pour le milieu d'amortissement (1), **caractérisé en ce que** le tube (11) est relié, par l'intermédiaire d'une soupape d'étranglement (12), propre à être réglée par une unité de réglage, à un conduit d'acheminement (13) pour le milieu d'amortissement (1) relié au cylindre (2), et **en ce que** la soupape d'étranglement (12) est reliée à une soupape de pesée (15), servant à la mesure de la masse du chargement de la voiture ou du wagon de chemin de fer.

2. Amortisseur à longue course selon la revendication 1, **caractérisé en ce que** la soupape d'étranglement (12) est reliée à un tachymètre prévu pour la mesure de la vitesse.

3. Amortisseur à longue course selon les revendications 1 et 2, **caractérisé en ce que** la soupape d'étranglement (12) est reliée à un accéléromètre prévu pour la mesure d'une force de choc, agissant sur la voiture ou le wagon.

4. Amortisseur à longue course selon les revendications 2 et 3, **caractérisé en ce que** la soupape de pesée, le tachymètre et l'accéléromètre sont reliés à la soupape d'étranglement (12) par l'intermédiaire d'une unité de réglage, qui commande un degré d'ouverture de la soupape d'étranglement (12).

5. Amortisseur à longue course selon les revendications 1 à 4, **caractérisé en ce que** le piston de cylindre (4) est pourvu, au niveau de son extrémité située à l'opposé du cylindre (2), d'un second cylindre (16) similaire.

6. Amortisseur à longue course selon la revendication 5, **caractérisé en ce que** le cylindre (2) et le second cylindre (16) sont reliés l'un à l'autre par l'intermédiaire de conduits d'équilibrage de pression (17, 18).
